# DEMANDE DE BREVET EUROPEEN

(11) **EP 2 199 771 A1**
(43) Date de publication de la demande: **23.06.2010**
(21) Numéro de dépôt: 09354049.0
(22) Date de dépôt: 10.11.2009
(51) Int. Cl.: G01L 19/00

(54) **Dispositif de mesure d'une grandeur telle la pression à l'intérieur d'une cuve remplie d'un gaz ou d'un liquide**

(30) Priorité: 22.12.2008 FR 0807338
(71) Demandeur: Schneider Electric Industries SAS, 92500 Rueil-Malmaison (FR)
(72) Inventeur: Milan, Thierry, 38050 Grenoble Cedex 09 (FR); Allard, Hervé, 38050 Grenoble Cedex 09 (FR)
(74) Mandataire: Colette, Marie-Françoise

(57) **Abrégé**

La présente invention concerne un dispositif de mesure d'une grandeur telle la pression à l'intérieur d'une cuve C remplie d'un gaz ou d'un liquide, en particulier la cuve d'un appareillage électrique, ladite cuve comportant un orifice dit premier (11) débouchant à l'intérieur d'une enceinte (12) comportant un orifice dit second (35) apte à être obturé ou libéré au moyen d'une valve ou analogue (28). Ce dispositif est **caractérisé en ce qu**'il comporte d'une part, une partie fixe (20) apte à être fixée dans le premier orifice (11), des moyens d'étanchéité dits premiers (25) aptes à assurer l'étanchéité entre cette partie fixe (20) et l'orifice dit premier (11) de la cuve, ladite partie fixe (20) comportant une ouverture (37) destinée au passage d'une partie mobile (26) reliée mécaniquement par l'une de ses extrémités, à un moyen d'actionnement (27) de ladite valve (28), et par son extrémité opposée, de manière définitive ou amovible, au capteur, ladite partie mobile (26) comportant un passage (30) destiné à permettre la communication entre l'enceinte (12) et le capteur, ladite partie mobile (26) étant mobile à l'intérieur de ladite ouverture (37) entre une première position dans laquelle ledit second orifice (35) est obturé, et une seconde position dans laquelle ledit second orifice (35) est libéré, et des moyens destinés à assurer l'étanchéité entre la partie mobile (26) et la partie fixe (20) pendant le déplacement de ladite partie mobile (26) et dans les première et seconde positions précitées de la partie mobile (26).

## Description

La présente invention concerne un dispositif de mesure d'une grandeur telle la pression à l'intérieur d'une cuve remplie d'un gaz ou d'un liquide, en particulier la cuve d'un appareillage électrique, ladite cuve comportant un orifice dit premier débouchant à l'intérieur d'une enceinte comportant un orifice dit second apte à être obturé ou libéré au moyen d'une valve ou analogue, ladite valve étant actionnable au moyen d'un organe de manoeuvre traversant ledit premier orifice et relié mécaniquement à un capteur, ledit organe de manoeuvre comportant un passage débouchant à l'une de ses extrémités, dans ladite enceinte, et à son extrémité opposée, à l'intérieur du capteur de manière à permettre la communication entre l'enceinte et ledit capteur, ledit organe étant mobile à l'intérieur dudit premier orifice, entre une première position dans laquelle il coopère avec la valve de manière à fermer le second orifice et une position dans laquelle il coopère avec ladite valve de manière à libérer ledit second orifice de manière à permettre l'introduction du gaz ou du liquide dans l'enceinte, ledit dispositif comportant en outre des moyens pour réaliser la fermeture étanche dudit premier orifice dans la position ouverte de la valve.

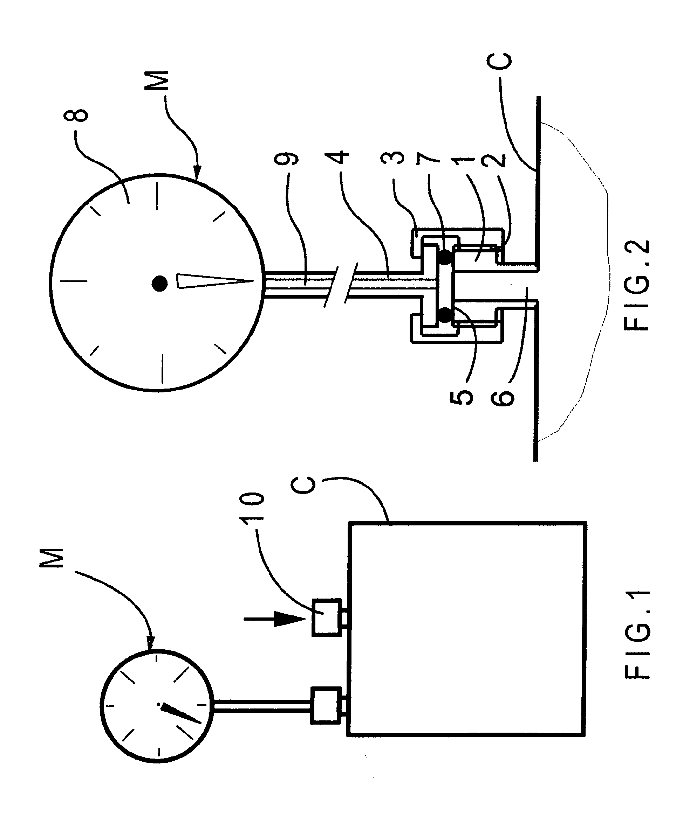

On connaît un dispositif de mesure comportant un manomètre vissé sur un insert solidaire de la cuve, tel qu'illustré sur la figure 1. Ce dispositif est fixé à demeure sur la cuve, un simple joint torique assurant l'étanchéité entre une partie du capteur et l'insert au niveau de l'orifice. Les inconvénients de ce dispositif tiennent en ce qu'il est nécessaire de prévoir un orifice de remplissage et, qu'en cas d'intervention sur ce manomètre, nécessitant son extraction, par exemple pour son remplacement, il est nécessaire de vidanger la cuve pour la remplir ensuite, ce qui présente un certain nombre d'inconvénients connus notamment lorsque cette manipulation est réalisée sur le site sur des appareillages installés.

Selon un autre dispositif connu tel qu'illustré sur la figure 2, ce dispositif peut également être placé sur l'orifice de remplissage relié à une valve. Dans ce cas, il est vissé directement sur l'intérieur de l'orifice de remplissage lequel orifice débouche dans une enceinte logeant une valve. Dans ce cas, le manomètre est vissé directement dans l'orifice et l'étanchéité est réalisée par un épaulement comprenant une rainure recevant le joint, assurant un contact étanche avec l'enveloppe lors de l'arrêt du corps du capteur sur l'enveloppe après le vissage.

Ce dispositif présente un certain nombre d'inconvénients qui tiennent en ce qu'il existe un risque de fuite lors du vissage du manomètre qui représente une pièce relativement encombrante, avec le risque par exemple de fausser le pas de vis. Et si le vissage est incomplet, l'étanchéité n'est plus assurée ou bien incomplète, d'où un risque d'endommagement du capteur et d'une perte d'étanchéité supplémentaire.
Un autre inconvénient tient en ce qu'il est impossible d'orienter le manomètre sans modifier ce vissage et donc sans le rendre incomplet et ainsi perdre de l'étanchéité.
Enfin, à chaque introduction-extraction de ce dispositif, il est perdu une certaine quantité de gaz sous pression, car la valve est forcément entrouverte en début du vissage-dévissage, l'étanchéité totale n'étant obtenue que lorsque le manomètre est complètement vissé.

La présente invention résout ces inconvénients et propose un dispositif de mesure de conception simple, permettant d'obtenir une étanchéité accrue, notamment pendant le montage où les pertes sont pratiquement inexistantes. Ce dispositif est en outre complètement orientable et démontable très aisément.

A cet effet, la présente invention a pour objet un dispositif de mesure du genre précédemment mentionné, ce dispositif étant **caractérisé en ce qu**'il comporte d'une part, une partie fixe apte à être fixée dans le premier orifice, des moyens d'étanchéité dits premiers aptes à assurer l'étanchéité entre cette partie fixe et ledit premier orifice, ladite partie fixe comportant une ouverture destinée au passage d'une partie mobile reliée mécaniquement par l'une de ses extrémités, à un moyen d'actionnement de ladite valve, et par son extrémité opposée, de manière définitive ou amovible, au capteur, ladite partie mobile comportant un passage destiné à permettre la communication entre l'enceinte et le capteur, ladite partie mobile étant mobile à l'intérieur de ladite ouverture entre une première position dans laquelle ledit second orifice est obturé, et une seconde position dans laquelle ledit second orifice est libéré, et des moyens destinés à assurer l'étanchéité entre la partie mobile et la partie fixe pendant le déplacement de ladite partie mobile et dans les première et seconde positions précitées de la partie mobile.

Selon une caractéristique particulière, ce dispositif comporte des moyens d'encliquetage de la partie mobile sur la partie fixe à l'intérieur de l'ouverture précitée permettant de retenir ladite partie mobile dans la seconde position précitée.

Selon une autre caractéristique, la partie fixe précitée comporte deux parties présentant respectivement deux diamètres extérieurs différents, la partie de plus petit diamètre est introduite et fixée dans ledit premier orifice, la partie de plus grand diamètre comportant une face destinée à venir en appui sur la partie de l'enveloppe entourant ledit premier orifice, et les moyens d'étanchéité dits premiers comportent un joint torique interposé entre cette face de la première partie et cette partie de l'enveloppe.

Selon une autre caractéristique, la partie présentant le diamètre extérieur le plus petit est vissée à l'intérieur du premier orifice précité. Cette partie fixe est fixée dans l'orifice en remplacement du bouchon fermant l'orifice.

Selon une autre caractéristique, la partie mobile précitée comporte une partie cylindrique comportant au moins une rainure destinée à recevoir respectivement au moins un joint torique interposé(s) entre la partie fixe et la partie mobile.

Selon une autre caractéristique, la partie mobile est montée mobile en translation à l'intérieur de la partie fixe.

Selon une autre caractéristique, le capteur précité est solidaire de la partie mobile.

Selon une autre caractéristique, le capteur précité est fixé de manière amovible à ladite partie mobile.

Selon une autre caractéristique, la partie mobile présente une longueur réglable de manière à pouvoir s'adapter à différentes tailles d'enceintes possibles.

Selon une autre caractéristique, le capteur précité est destiné à la mesure de la pression, de la température, de la composition ou de l'humidité du gaz sous pression ou au prélèvement d'échantillons pour des analyses ultérieures.

Mais d'autres avantages et caractéristiques de l'invention apparaîtront mieux dans la description détaillée qui suit et se réfère aux dessins annexés donnés uniquement à titre d'exemple et dans lesquels :

Les figures sont des représentations schématiques de deux manomètres selon l'art antérieur et d'un manomètre selon l'invention.
- La figure 1 est une représentation schématique d'un manomètre connu de l'art antérieur, mis en service sur une cuve,
- La figure 2 est une représentation schématique illustrant la partie intérieure de ce manomètre,
- La figure 3 est une représentation schématique d'un autre manomètre connu mis en service sur une cuve,
- La figure 4 illustre cette réalisation connue sans mise en place du manomètre, celui-ci ayant été remplacé par un bouchon.
- La figure 4a illustre cette réalisation en position d'utilisation de ce manomètre,
- La figure 4b est une vue de détail de la valve utilisée dans cette réalisation,
- Les figures 5,6 et 7 illustrent une réalisation d'un manomètre selon l'invention :

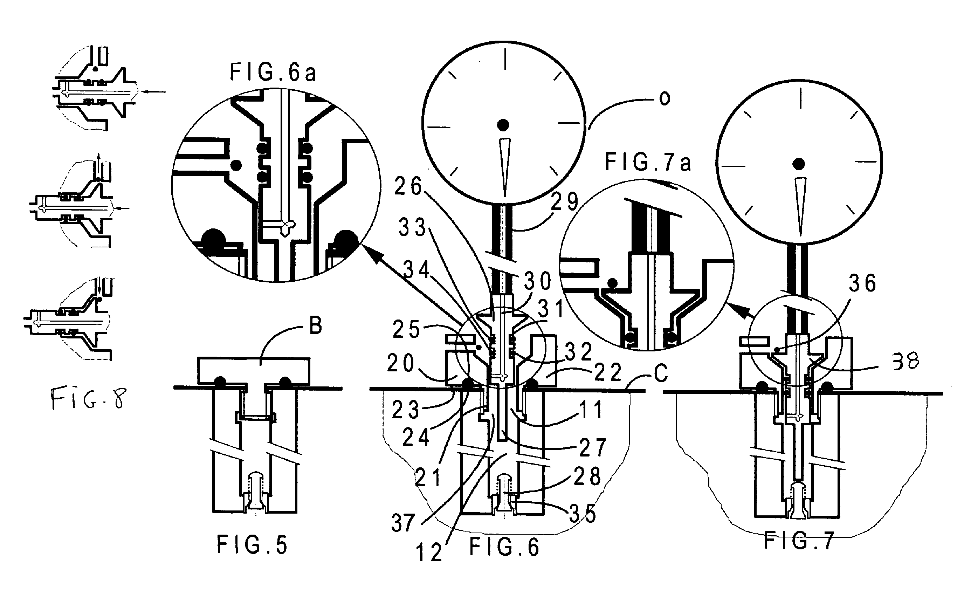

- La figure 5 illustre ledit manomètre dans une position dans laquelle celui-ci n'est pas utilisé et est remplacé par un bouchon,
- La figure 6 illustre ledit manomètre au début de sa mise en place, et la figure 6a est une vue de détail illustrant une partie de l'organe de manoeuvre, et
- La figure 7 illustre ledit manomètre en position d'utilisation de celui-ci, la figure 7a étant une vue de détail illustrant une partie de cet organe de manoeuvre, et
- La figure 8 est une vue partielle, illustrant trois étapes d'encliquetage de la partie mobile dans la partie fixe.

Sur les figures 1 et 2, a été représenté un manomètre M selon l'art antérieur, destiné à mesurer la pression à l'intérieur d'une cuve C appartenant à un appareillage électrique tel un disjoncteur moyenne tension. Ce manomètre M est fixé sur un insert 1 solidaire de la cuve et comportant un filetage extérieur 2 sur lequel vient se visser une pièce de liaison 3 apte à coopérer avec une partie 4 en forme de T du manomètre pour réaliser la fixation de celui-ci à la cuve, avec interposition, entre cette partie en forme de T et la surface 5 de l'insert 1 situé autour de l'orifice 6 de la cuve C, d'un joint torique 7. Cette partie 4 en forme de T est reliée par l'une de ses extrémités, à un cadran de mesure 8 et comporte un passage 9 destiné à assurer la communication entre l'intérieur de la cuve C et le cadran 8. Les inconvénients d'un tel dispositif ont été décrits précédemment. On remarque en particulier qu'il est nécessaire de prévoir un orifice particulier 10 (figure 1) pour le remplissage de la cuve C.

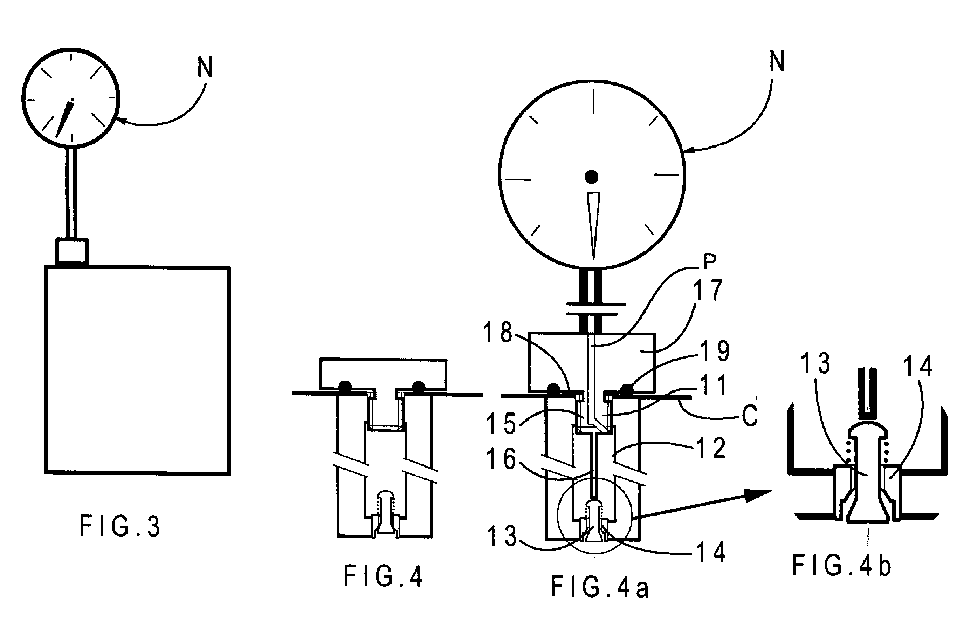

Sur les figures 3 à 4b, a été représenté un autre manomètre N selon l'art antérieur. Celui-ci est mis en place sur l'orifice 11 de remplissage de la cuve C, lequel orifice 11 débouche dans une enceinte 12 comportant une valve 13 apte à libérer ou à obturer un orifice dit second 14 de l'enceinte 12. Ce manomètre N comporte trois parties solidaires l'une avec l'autre, respectivement une première partie 15 apte à être vissée dans l'orifice dit premier précité 11 de l'enceinte 12, une seconde partie 16 apte à coopérer avec la valve 13 et une troisième partie 17 apte à être amenée en contact avec la surface 18 de l'enveloppe de la cuve entourant ledit premier orifice 11 en fin de vissage, avec interposition d'un joint 19 entre cette partie 17 et la surface précitée 18 de l'enveloppe. Les première 15 et troisième 17 parties précitées comportent un passage p destiné à assurer la communication entre l'intérieur de l'enceinte 12 et le capteur N. En fin de vissage, la valve 13 libère le second orifice 14, ce qui permet au gaz présent dans la cuve C de pénétrer à l'intérieur de l'enceinte. Comme déjà indiqué précédemment, l'étanchéité n'est vraiment réalisée qu'en fin de vissage par le joint torique 19, et il n'est alors pas possible de modifier l'orientation du capteur sans modifier l'étanchéité.

Sur les figures 5 à 7, a été représenté un manomètre O selon une réalisation particulière de l'invention.

Ce manomètre O est destiné également à coopérer avec l'orifice de remplissage 11 de la cuve et comporte une partie fixe 20 comportant deux parties 21,22 présentant respectivement deux diamètres extérieurs différents. La partie de plus petit diamètre 21 est destinée à être vissée dans l'orifice de remplissage 11, ou orifice dit premier de l'enceinte 12, tandis que la partie de plus grand diamètre 22 est destinée à venir en appui par l'intermédiaire d'une face 23 formée par l'épaulement réalisé par la différence des diamètres précités, sur la surface 24 de l'enveloppe entourant ledit premier orifice 11. Un joint 25 est interposé entre cette face 23 de la partie 22 et cette surface 24 de l'enveloppe située en regard de ladite face 23.

Ce manomètre O comporte également une partie mobile 26 en translation à l'intérieur d'une ouverture 37 de la partie fixe 20 et comportant une pièce de forme sensiblement cylindrique reliée par l'une de ses extrémités, à une partie 27 coopérant avec la valve 28 et par son extrémité opposée, au corps 29 du capteur. Cette partie mobile 26 comporte un passage 30 permettant la communication entre le corps 29 du capteur et l'intérieur de l'enceinte 12 et présente sur sa surface extérieure deux rainures 31,32 aptes à loger respectivement deux joints d'étanchéité 33,34.

Ce dispositif de mesure de la pression comporte également des moyens d'encliquetage 36,38, ou tout autre moyen de fixation anti-retour, pour bloquer le manomètre en position par l'effet de la pression, prévus en partie 38 sur la partie mobile 26 et en partie 36 sur la partie fixe précitée 20, lesdits moyens étant destinés à retenir la partie mobile 26 dans une position dans laquelle elle coopère avec la valve 28 pour réaliser l'ouverture du second orifice précité 35.

Le fonctionnement de ce dispositif de mesure va être décrit dans ce qui suit en référence aux figures 5 à 7.

Sur la figure 5, le capteur n'est pas mis en place sur l'enveloppe et la fermeture de l'orifice est réalisée au moyen d'un bouchon B.

Sur les figures 6 et 6a, la mise en place du capteur a commencé, le bouchon B ayant été retiré. La partie fixe 20 a été vissée dans l'orifice dit premier 11 avec interposition d'un joint torique 25 entre l'épaulement de la partie fixe et la surface 24 de l'enveloppe entourant l'orifice dit premier 11, ce qui garantit l'étanchéité entre ladite partie fixe 20 et l'orifice 11 à la fin du vissage. La partie mobile 26 a été introduite en partie à l'intérieur de l'ouverture 37 de la partie fixe 20, mais l'étanchéité entre la partie mobile et la partie fixe n'est pas encore réalisée.

Sur les figures 7 et 7a, la partie mobile 26 a été introduite complètement à l'intérieur de l'enceinte 12. Pendant ce mouvement, on a tout d'abord garanti l'étanchéité entre la partie mobile 26 et la partie fixe 20, puis la valve 28 a été ouverte. Ceci permet de libérer le second orifice 35 de manière à permettre l'introduction du gaz à l'intérieur de l'enceinte 12. La partie mobile 26 du capteur a été encliquetée sur la partie fixe 20 de manière à retenir le capteur dans cette position grâce aux moyens d'encliquetage 36,38. La mesure de la pression peut alors être effectuée. Ainsi, aucune perte de gaz ne se produit au niveau du montage, seul se produisant un petit apport d'air. Cette étanchéité est réalisée dans un premier temps entre la partie fixe 20 et l'orifice 11 de l'enveloppe grâce au premier joint torique 25, alors que la valve 28 est en position fermée. Puis, dans un second temps, cette étanchéité est réalisée pendant l'ouverture de ladite valve 28 grâce à la présence des autres joints toriques 33,34. On notera que le nombre de joints pourra varier en fonction de la pression à étancher.

Ainsi, grâce à l'invention, tous les inconvénients cités précédemment pour les dispositifs de l'art antérieur sont supprimés.

Ainsi, l'étanchéité totale est obtenue sans vissage grâce au système de joint torique comprimé dans la rainure par le contact sur l'alésage, et ce, avant de percuter la valve. Il n'y a donc aucune perte de gaz au montage.

Ce manomètre est complètement orientable et démontable très aisément. Il est également possible d'avoir un corps de capteur standard et d'adapter la longueur du percuteur aux divers orifices possibles. La partie fixe servant d'interface peut elle aussi être adaptée aux filetages des divers orifices possibles.

Avec ce système, il est possible d'utiliser toute sorte de capteurs pour faire des tests sur site, sans laisser ces capteurs à demeure.

Cette solution permet de mettre un capteur en contact avec le gaz présent dans une enveloppe soit provisoirement soit de façon permanente.

Ce dispositif est destiné à être installé sur site sur des enveloppes d'appareillage installées et mises sous tension, ou bien en usine sur des produits nouveaux, sur des appareils possédant à leur orifice de remplissage, un dispositif de type valve étanche.

On a donc réalisé suivant l'invention un dispositif embrochable dont l'installation pourra être faite sans perte ou relâchement de gaz dans l'air environnant. Seule subsiste une perte résiduelle (ou échappement) négligeable à l'extraction de la partie mobile, correspondant au volume réduit de l'enceinte.

Un avantage procuré par un tel système embrochable et débrochable est de permettre des contrôles périodiques lors d'opérations de maintenance par exemple en utilisant des capteurs précis sophistiqués et étalonnés. Ce qui présente un intérêt en terme de fiabilité et de coûts du matériel installé.

On notera également que les moyens d'encliquetage pourront consister par exemple en des lames ou épingles ressort ou autres moyens, lesquelles pourront éventuellement être retirées pour réaliser plus facilement l'extraction dudit manomètre.

On notera que cette invention peut s'appliquer à d'autres types de capteurs (pour le prélèvement d'échantillons, la mesure sur le gaz par exemple de sa composition etc....). Le dispositif peut être adapté aux divers orifices qui existent, grâce à la partie fixe. La fixation de celle-ci est fonction de l'orifice existant.

Ce dispositif pourra être monté en usine sur l'enveloppe et permettra ensuite une interchangeabilité des capteurs ou un remplacement aisé de ceux-ci en cas de défaillance.

Il pourra également être monté sur un produit non équipé pour augmenter les options proposées sur ce produit.

Un usage ponctuel pourra également être envisagé lors d'opérations de maintenance (mesure de pression, de température, de composition, d'humidité etc....), ou en fin de vie préalablement à la vidange de l'appareil.

Le fait que la partie mobile puisse présenter une longueur réglable permet de disposer de la longueur adéquate pour actionner, au bon moment de l'introduction, la valve.

On notera également que le corps mobile pourra lui-même être réalisé en deux parties pour s'adapter aux divers orifices en place.

Bien entendu, l'invention n'est pas limitée aux modes de réalisation décrits et illustrés qui n'ont été donnés qu'à titre d'exemple.

C'est ainsi par exemple que la partie fixe aurait pu être fixée dans l'orifice dit premier de la cuve autrement que par vissage.

De même, de manière à permettre de fixer l'orientation du capteur, on pourrait prévoir une partie mobile présentant une forme ne permettant pas la rotation, par exemple une forme elliptique.

Au contraire, l'invention comprend tous les équivalents techniques des moyens décrits ainsi que leurs combinaisons si celles-ci sont réalisées suivant son esprit.

## Revendications

1. Dispositif de mesure d'une grandeur telle la pression à l'intérieur d'une cuve remplie d'un gaz ou d'un liquide, en particulier la cuve d'un appareillage électrique, ladite cuve comportant un orifice dit premier débouchant à l'intérieur d'une enceinte comportant un orifice dit second apte à être obturé ou libéré au moyen d'une valve ou analogue, ladite valve étant actionnable au moyen d'un organe de manoeuvre traversant ledit premier orifice et relié mécaniquement à un capteur, ledit organe étant mobile à l'intérieur dudit premier orifice, entre une première position dans laquelle il coopère avec la valve de manière à fermer le second orifice et une position dans laquelle il coopère avec ladite valve de manière à libérer ledit second orifice de manière à permettre l'introduction du gaz ou du liquide dans l'enceinte, ledit dispositif comportant d'une part, une partie fixe (20) apte à être fixée dans le premier orifice (11), ladite partie fixe (20) comportant une ouverture (37) destinée au passage d'une partie mobile (26) constituant l'organe de manoeuvre précité et étant reliée mécaniquement par l'une de ses extrémités, à un moyen d'actionnement de ladite valve (28), et par son extrémité opposée, de manière définitive ou amovible, au capteur, ladite partie mobile (26) comportant un passage (30) destiné à permettre la communication entre l'enceinte (12) et le capteur, ladite partie mobile (26) étant mobile à l'intérieur de ladite ouverture (37) entre la première position précitée dans laquelle ledit second orifice (35) est obturé, et la seconde position précitée dans laquelle ledit second orifice (35) est libéré,
**caractérisée en ce que** la partie fixe précitée (20) comporte deux parties (21,22) présentant respectivement deux diamètres extérieurs différents, **en ce que** la partie de plus petit diamètre (21) est introduite et fixée dans ledit premier orifice (11), la partie de plus grand diamètre (22) comportant une face (23) destinée à venir en appui sur la partie (24) de l'enveloppe de la cuve C entourant ledit premier orifice (11), **en ce qu'**il comporte des moyens d'étanchéité dits premiers comportant un joint (25) interposé entre cette face (23) de la première partie (20) et cette partie (24) de l'enveloppe, **en ce que** la partie mobile précitée (26) comporte une partie cylindrique apte à coulisser dans la partie fixe, **en ce qu'**il comporte des moyens d'étanchéité dits seconds comportant un joint interposé entre la partie fixe et la partie cylindrique précitée et destiné à assurer l'étanchéité entre la partie fixe et la partie mobile pendant le déplacement de ladite partie mobile (26) et dans les première et seconde positions précitées de la partie mobile (26), et **en ce qu'**il comporte des moyens de fixation pour retenir la partie mobile dans une position dans la quelle elle coopère avec la valve pour réaliser l'ouverture du second orifice précité à l'encontre de l'effet de la force de la pression.

2. Dispositif de mesure selon la revendication 1, **caractérisé en ce que** les moyens de fixation précités comportent des moyens d'encliquetage (36,38) de la partie mobile (26) sur la partie fixe (20) à l'intérieur de l'ouverture précitée (37), lesdits moyens permettant de retenir ladite partie mobile (26) dans la seconde position précitée.

3. Dispositif de mesure selon la revendication 1 ou 2, **caractérisé en ce que** les moyens d'étanchéité dits premiers et/ou les moyens d'étanchéité dits seconds comportent au moins un joint torique.

4. Dispositif de mesure selon l'une quelconque des revendications précédentes, **caractérisé en ce que** la partie (21) présentant le diamètre extérieur le plus petit est vissée à l'intérieur du premier orifice précité (11).

5. Dispositif de mesure selon l'une quelconque des revendications précédentes, **caractérisé en ce que** la partie mobile précitée (26) comporte une partie cylindrique comportant au moins une rainure (31,32) destinée à recevoir respectivement au moins un joint torique (33,34) interposé(s) entre la partie fixe (20) et la partie mobile (26).

6. Dispositif de mesure selon l'une quelconque des revendications précédentes, **caractérisé en ce que** le capteur précité est solidaire de la partie mobile (26).

7. Dispositif de mesure selon l'une quelconque des revendications 1 à 6, **caractérisé en ce que** le capteur précité est fixé de manière amovible à ladite partie mobile (26).

8. Dispositif de mesure selon l'une quelconque des revendications précédentes, **caractérisé en ce que** la partie mobile précitée (26) présente une longueur réglable de manière à pouvoir s'adapter à différentes tailles d'enceintes possibles.

9. Dispositif de mesure selon l'une quelconque des revendications précédentes, **caractérisé en ce que** le capteur précité est destiné à la mesure de la pression, de la température, de la composition ou de l'humidité du gaz sous pression ou au prélèvement d'échantillons pour des analyses ultérieures.
